# EUROPEAN PATENT SPECIFICATION

(11) **EP 2 624 648 B1**
(45) Date of publication and mention of the grant of the patent: **17.04.2019**
(21) Application number: 11828142.7
(22) Date of filing: 30.09.2011
(51) Int. Cl.: H04W 72/04, H04B 7/26, H04W 16/14

(54) **METHOD AND DEVICE FOR DATA TRANSMISSION**
VERFAHREN UND VORRICHTUNG FÜR DATENÜBERTRAGUNG
PROCÉDÉ ET DISPOSITIF PERMETTANT UNE TRANSMISSION DE DONNÉES

(30) Priority: 30.09.2010 CN 201010298077
(43) Date of publication of application: 07.08.2013
(73) Proprietor: China Mobile Communications Corporation, Xicheng District Beijing 100032 (CN)
(72) Inventor: LI, Nan, Beijing 100032 (CN)
(74) Representative: Dennemeyer & Associates S.A.
(86) International application number: PCT/CN2011/080405
(87) International publication number: WO 2012/041246

(56) References cited:
- WO-A2-2007/146017
- CN-A- 101 729 125
- CN-A- 101 778 392
- CN-A- 101 835 200
- US-A1- 2007 286 156

## Description

### Field of the Invention

The present invention relates to the field of wireless communications and particularly to a data transmission method and apparatus.

### Background of the Invention

In an existing wireless communication system, there are typically communication systems based upon at least two communication technologies, for example, a Time Division Duplex (TDD)-based TDD system and a Frequency Division Duplex (FDD)-based FDD system in a network, where the TDD system and the FDD system occupy different frequency bands respectively.

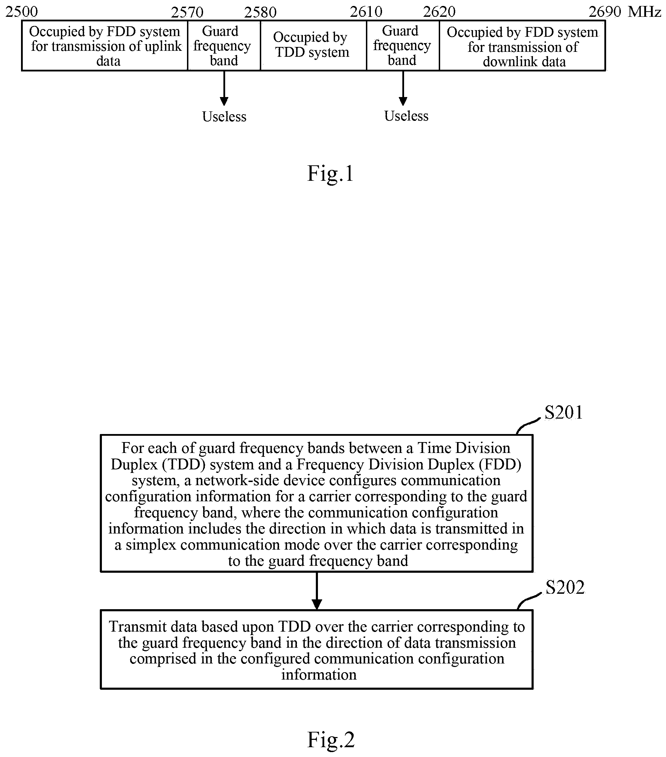

In the prior art, in order to lower mutual interference arising from data transmission by the TDD system and the FDD system in the network, it is typical in frequency planning to reserve a part of a frequency band interval between the frequency band occupied by the TDD system and the frequency band occupied by the FDD system, and this reserved frequency band interval can act as a guard frequency band as illustrated in Fig.1. Fig.1 is a schematic diagram of the frequency bands planned for the TDD system and the FDD system in the prior art, and in Fig.1, the FDD system occupies the frequency band of 2500 to 2570 MHz for transmission of uplink data and the frequency band of 2620 to 2690 MHz for transmission of downlink data, and the TDD system occupies the frequency band of 2580 to 2610 MHz for transmission of uplink and downlink data, that is, the TDD system transmits uplink and downlink data in completely overlapping frequency bands, where there is an frequency band interval of 2570 to 2580 MHz between the frequency band occupied by the FDD system for transmission of uplink data and the frequency band occupied by the TDD system, and there is an frequency band interval of 2610 to 2620 MHz between the frequency band occupied by the FDD system for transmission of downlink data and the frequency band occupied by the TDD system, that is, two guard frequency bands to lower interference between the two systems. The size of a guard frequency band depends upon performance of a radio frequency filter used for a device and a coupling loss between base stations of the FDD and TDD systems, and the guard frequency bands in Fig.1 merely relate to an example.

However in the prior art, these guard frequency bands to lower interference between the two systems are of no use, that is, no data can be transmitted over frequency resources of the guard frequency bands, and the data transmission method in the prior art undoubtedly results in a waste of the frequency resources because the frequency resources are limited and not renewable.

US 2007/286156 A1 discloses a wireless system and method, which includes a frequency division duplex (FDD) system configured to provide at least a first FDD channel operating within a first frequency band. A time division duplex (TDD) system is configured to provide at least a first TDD channel operating within a second frequency band. The first frequency band and the second frequency band are separated by a third frequency band, and a half-duplex frequency division duplex (H-FDD) system is configured to provide at least a first H-FDD channel operating within the third frequency band. A transmission of the first H-FDD channel may be synchronized with one of an uplink transmission and a downlink transmission of the first TDD channel.

CN 101 835 200 A discloses a system access method, a communication system, a user equipment and network-side equipment, which are used for controlling the user equipment to access an LTE-Advanced system by using a target carrier. The system access method provided by the invention includes the following steps of: determining target carrier information, which is required when the user equipment accesses the communication system, by a network side; and sending the target carrier information to the user equipment and indicating the user equipment to access the communication system according to the target carrier information.

### Summary of the Invention

In view of this, embodiments of the invention provide a data transmission method and apparatus so as to address the problem of a waste of frequency resources in the data transmission method in the prior art.

An embodiment of the invention provides a data transmission method. The method includes: for each of guard frequency bands between a TDD system and an FDD system, configuring, by a network-side device, communication configuration information for a carrier corresponding to the guard frequency band, where the communication configuration information includes the direction in which data is transmitted in a simplex communication mode over the carrier corresponding to the guard frequency band; and transmitting data using TDD technique over the carrier corresponding to the guard frequency band in the direction of data transmission included in the configured communication configuration information. Configuring the communication configuration information, including the direction of data transmission, for the carrier corresponding to the guard frequency band includes: determining, by the network-side device, the direction in which the FDD system transmits data in a first frequency band adjacent in frequency to the guard frequency band, where the direction of data transmission by the FDD system includes an uplink direction and a downlink direction; when the direction in which the FDD system transmits data in the first frequency band is determined as the uplink direction, configuring the communication configuration information for the carrier corresponding to the guard frequency band to include the direction in which data is transmitted in the simplex communication mode as the uplink direction; and when the direction in which the FDD system transmits data in the first frequency band is determined as the downlink direction, configuring the communication configuration information for the carrier corresponding to the guard frequency band to include the direction in which data is transmitted in the simplex communication mode as the downlink direction. The method further includes: when the direction in which data is transmitted in the simplex communication mode and which is comprised by the communication configuration information for the carrier corresponding to the guard frequency band is the uplink direction, then adding, by the network-side device, in TDD-Config carried by the communication configuration information a central frequency indicator parameter EARFCN of the carrier corresponding to the guard frequency band; and carrying the communication configuration information with EARFCN added therein in broadcast information, and bearing the broadcast information over another carrier than the carrier corresponding to the guard frequency band for transmission to the user equipment to instruct the user equipment to transmit data over the carrier corresponding to the guard frequency band according to the received communication configuration information.

An embodiment of the invention provides a data transmission apparatus. The apparatus includes: a configuring module configured, for each of guard frequency bands between a TDD system and an FDD system, to configure communication configuration information for a carrier corresponding to the guard frequency band, where the communication configuration information includes the direction in which data is transmitted in a simplex communication mode over the carrier corresponding to the guard frequency band; and a transmitting module configured to transmit data using TDD technique over the carrier corresponding to the guard frequency band in the direction of data transmission included in the configured communication configuration information. The configuring module is further configured to determine the direction in which the FDD system transmits data in a first frequency band adjacent in frequency to the guard frequency band, where the direction of data transmission by the FDD system includes an uplink direction and a downlink direction; and when the direction in which the FDD system transmits data in the first frequency band is determined as the uplink direction, to configure the communication configuration information for the carrier corresponding to the guard frequency band to include the direction in which data is transmitted in the simplex communication mode as the uplink direction, and when the direction in which the FDD system transmits data in the first frequency band is determined as the downlink direction, to configure the communication configuration information for the carrier corresponding to the guard frequency band to include the direction in which data is transmitted in the simplex communication mode as the downlink direction. The apparatus further includes a broadcasting module. When the direction in which the FDD system transmits data in the first frequency band is determined as the uplink direction, the configuring module is further configured to add in TDD-Config carried by the communication configuration information a central frequency indicator parameter EARFCN of the carrier corresponding to the guard frequency band, and the broadcasting module is further configured to carry the communication configuration information with EARFCN added therein in broadcast information, and to bear the broadcast information over another carrier than the carrier corresponding to the guard frequency band for transmission to the user equipment to instruct the user equipment to transmit data over the carrier corresponding to the guard frequency band according to the received communication configuration information.

An embodiment of the invention provides a network-side device including the data transmission apparatus described above.

The embodiments of the invention provide a data transmission method and apparatus, and in the method, for each of guard frequency bands between a TDD system and an FDD system, a network-side device configures communication configuration information for a carrier corresponding to the guard frequency band, where the communication configuration information includes the direction in which data is transmitted in a simplex communication mode over the carrier corresponding to the guard frequency band, and transmits data based upon TDD over the carrier corresponding to the guard frequency band in the direction of data transmission included in the configured communication configuration information. Since data is transmitted in the simplex communication mode based upon TDD in the guard frequency band according to the communication configuration information in the embodiments of the invention, the FDD system adjacent in frequency will be protected against mutual interference arising from transmission of data in the guard frequency band, and transmission of the data over a frequency resource of the guard frequency band can also save the frequency resource.

### Brief Description of the Drawings

Fig.1 is a schematic diagram of frequency bands planned for a TDD system and an FDD system in the prior art;
Fig.2 is a data transmission process according to an embodiment of the invention;
Fig.3 is a schematic diagram of frequency bands occupied respectively by a TDD system and an FDD system and guard frequency bands according to an embodiment of the invention;
Fig.4 is a schematic diagram of a typical frame structure of an LTE TDD system according to an embodiment of the invention;
Fig.5 is a schematic diagram of configuring time slots, among which a downlink time slot is disabled, for a carrier corresponding to the guard frequency band in which uplink data is transmitted according to an embodiment of the invention;
Fig.6 is a schematic diagram of configuring time slots, among which a downlink time slot and a downlink pilot time slot are disabled, for a carrier corresponding to the guard frequency band in which uplink data is transmitted according to an embodiment of the invention;
Fig.7 is a schematic diagram of configuring time slots, among which an uplink time slot is disabled, for a carrier corresponding to the guard frequency band in which downlink data is transmitted according to an embodiment of the invention;
Fig.8 is a schematic diagram of configuring time slots, among which an uplink time slot and an uplink pilot time slot are disabled, for a carrier corresponding to the guard frequency band in which downlink data is transmitted according to an embodiment of the invention;
Fig.9 is a schematic structural diagram of a data transmission apparatus according to an embodiment of the invention;
Fig.10 is a schematic structural diagram of a wireless communication system according to an embodiment of the invention; and
Fig.11 is a schematic structural diagram of a terminal according to an embodiment of the invention.

### Detailed Description of the Embodiments

In a practical application, if there is no guard frequency band between a frequency band occupied by a TDD system and a frequency band occupied by an FDD system, then mutual interference may possibly arise in the operating frequency bands of the two systems or at the edges thereof during transmission of data. This is because the TDD system transmits uplink data and downlink data in completely overlapping frequency bands but transmits uplink data and downlink data at the same frequency in different time slots, and the FDD system transmits uplink data and downlink data in non-overlapping frequency bands without distinguishing between time slots. Assumed the FDD system occupies the frequency band of 2500 to 2570 MHz for transmission of uplink data, and the TDD system occupies the frequency band of 2570 to 2610 MHz for transmission of uplink/downlink data, that is, there is no guard frequency band between the frequency band of the FDD system for transmission of uplink data and the frequency band of the TDD system for transmission uplink/downlink data, and then in a specific frequency band range adjacent to the frequency bands occupied by the two systems, the two systems may possibly transmit data in different directions at the same time and the same frequency, that is, the TDD system transmits downlink data at a frequency at a time, and at this time the FDD system also transmits uplink data at that frequency, so that the data in the different directions may collide and annihilate each other.

Thus, in order to save a frequency resource, embodiments of the invention transmit data in a guard frequency band, and in order to protect the FDD system adjacent in frequency against interference mentioned above arising from transmission of data in the guard frequency band, the embodiments of the invention transmit data in the guard frequency band based upon TDD and in a simplex communication mode, particularly in the direction of data transmission consistent with that of the FDD system adjacent in frequency, so that no mutual interference will arise with the FDD system adjacent in frequency during transmission of the data in the guard frequency band.

The embodiments of the invention will be described below in details with reference to the drawings.

Fig.2 illustrates a data transmission process according to an embodiment of the invention, which particularly includes the following steps:
S201: For each of guard frequency bands between a Time Division Duplex (TDD) system and a Frequency Division Duplex (FDD) system, a network-side device configures communication configuration information for a carrier corresponding to the guard frequency band, where the communication configuration information includes the direction in which data is transmitted in a simplex communication mode over the carrier corresponding to the guard frequency band.

Particularly the network-side device transmits data according to the configured communication configuration information, and in order to save a frequency resource, an embodiment of the invention configures the communication configuration information for the carrier corresponding to the guard frequency band by transmitting data over the carrier corresponding to the guard frequency band. Moreover, in order to protect an FDD system adjacent in frequency against interference arising from transmission of the data over the carrier corresponding to the guard frequency band, the network-side device transmits the data in the simplex communication mode in the guard frequency band, and to this end, the communication configuration information includes the direction in which data is transmitted in the simplex communication mode over the carrier corresponding to the guard frequency band. Moreover the carrier corresponding to the guard frequency band is a carrier with a frequency band thereof falling into the range of the guard frequency band.

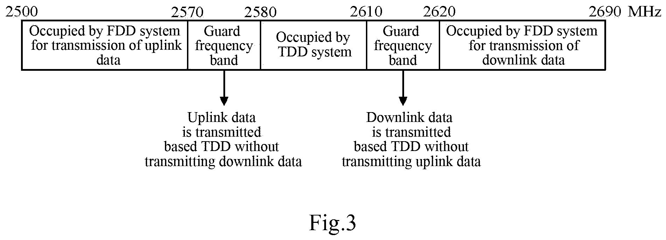

Specifically the network-side device firstly determines frequency bands occupied respectively by the TDD system and the FDD system and determines frequency bands between the frequency bands occupied by the TDD system and the frequency bands occupied by the FDD system as guard frequency bands as illustrated in Fig.3.

Fig.3 is a schematic diagram of the frequency bands occupied respectively by the TDD system and the FDD system and the guard frequency bands according to an embodiment of the invention, and in Fig.3, the network-side device determines the frequency band occupied by the FDD system as the frequency band of 2500 to 2570 MHz for transmission of uplink data and the frequency band occupied by the TDD system as the frequency band of 2580 to 2610 MHz for transmission uplink/downlink data, and then determines the frequency band of 2570 to 2580 MHz as a guard frequency band and similarly the frequency band of 2610 to 2620 MHz as another guard frequency band.

In an embodiment of the invention, after the respective guard frequency bands are determined, for each of the guard frequency bands, the network-side device configures communication configuration information for a carrier corresponding to the guard frequency band, where the communication configuration information includes the direction of data transmission consistent with that of the TDD system adjacent in frequency. Specifically the network-side device determines the direction in which the FDD system transmits data in a first frequency band adjacent in frequency to the guard frequency band, where the direction of data transmission by the FDD system includes an uplink direction and a downlink direction. When the direction in which the FDD system transmits data in the first frequency band is determined as the uplink direction, the communication configuration information is configured for the carrier corresponding to the guard frequency band to include the direction in which data is transmitted in the simplex communication mode as the uplink direction. When the direction in which the FDD system transmits data in the first frequency band is determined as the downlink direction, the communication configuration information is configured for the carrier corresponding to the guard frequency band to include the direction in which data is transmitted in the simplex communication mode as the downlink direction.

Further referring to Fig.3, for the guard frequency band of 2570 to 2580 MHz, the network-side device determines the direction in which the FDD system transmits data in a first frequency band adjacent in frequency to the guard frequency band, that is, determines the direction in which the FDD system transmits data in the first frequency band of 2500 to 2570 MHz adjacent in frequency to the guard frequency band of 2570 to 2580 MHz, as the uplink direction, that is, the FDD system transmits uplink data in the first frequency band of 2500 to 2570 MHz adjacent in frequency. Correspondingly for the guard frequency band of 2610 to 2620 MHz, the network-side device determines the direction in which the FDD system transmits data in a first frequency band of 2620 to 2690 MHz adjacent in frequency to the guard frequency band of 2610 to 2620 MHz as the downlink direction, that is, the FDD system transmits downlink data in the first frequency band of 2620 to 2690 MHz adjacent in frequency.

Thus for the guard frequency band of 2570 to 2580 MHz, the network-side device configures communication configuration information for a carrier corresponding to the guard frequency band of 2570 to 2580 MHz to include the direction in which data is transmitted in the simplex communication mode as the uplink direction. Correspondingly for the guard frequency band of 2610 to 2620 MHz, the network-side device configures communication configuration information for a carrier corresponding to the guard frequency band of 2610 to 2620 MHz to include the direction in which data is transmitted in the simplex communication mode as the downlink direction.
S203. Data is transmitted based upon TDD over the carrier corresponding to the guard frequency band in the direction of data transmission included in the configured communication configuration information.

Further referring to Fig.3, the network-side device transmits uplink data but no downlink data based upon TDD over the carrier corresponding to the guard frequency band of 2570 to 2580 MHz according to the communication configuration information configured for the carrier corresponding to the guard frequency band of 2570 to 2580 MHz. Correspondingly the network-side device transmits downlink data but no uplink data based upon TDD over the carrier corresponding to the guard frequency band of 2610 to 2620 MHz according to the communication configuration information configured for the carrier corresponding to the guard frequency band of 2610 to 2620 MHz.

In the foregoing process, the network-side device configures the corresponding communication configuration information for the respective guard frequency bands and transmits data in the guard frequency bands between the TDD system and the FDD system to thereby save frequency resources and improve the utilization of the frequency resources. Moreover the network-side device transmits the data in the guard frequency bands in the directions consistent with the directions in which the FDD system adjacent in frequency to the guard frequency bands transmits data, so the data transmitted in the guard frequency bands will not collide in the uplink and the downlink with the data transmitted by the FDD system adjacent in frequency and thus will not interfere mutually with the FDD system adjacent in frequency.

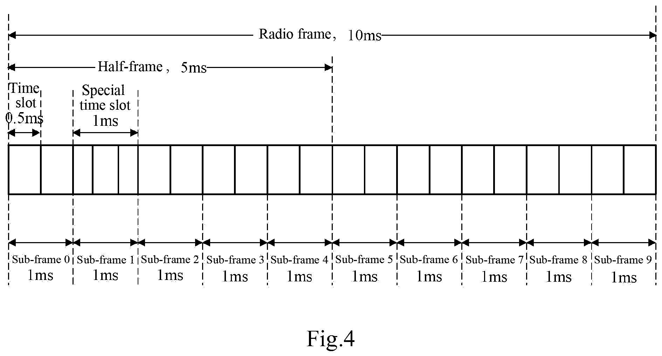

In a practical application, TDD refers to division of a period of time into time slots, each of which is designated as an uplink time slot or a downlink time slot in which uplink data or downlink data is transmitted respectively. Fig.4 is a schematic diagram of a typical frame structure of an LTE TDD system according to an embodiment of the invention, and in Fig.4, each radio frame is consisted of two half-frames each with a length of 5ms. Each half-frame is divided into 8 normal Time Slots (TSs) with a length of 0.5ms and 1 special time slot with a length of 1ms, and each two normal time slots are paired into a sub-frame. The special time slot is consisted of a Downlink Pilot Time Slot (DwPTS), a Guard Period (GP) and an Uplink Pilot Time Slot (UpPTS), where the DwPTS and the UpPTS are configurable in length, and the total length of the DwPTS, the GP and the UpPTS is equal to 1ms. Particularly the sub-frame 1 is a special time slot including a DwPTS, a GP and an UpPTS, and the sub-frame 6 may or may not be a special time slot dependent upon a time slot configuration strategy, where the sub-frame 6 is a non-special time slot in Fig.4 as an example.

The LTE TDD system supports switching periods of 5ms and 10ms, that is, a cycle per half-frame and a cycle per radio frame, and the sub-frame 0 and the sub-frame 5 and a DwPTS are reserved all the time for downlink transmission, and the other sub-frames can be configured for uplink transmission or downlink transmission. Assignment of uplink and downlink time slots supported definitely by the specification at present is as depicted in Table 1.

**Table 1**

| Configure Scheme No. | Sub-Frame No. | | | | | | | | | |
|---|---|---|---|---|---|---|---|---|---|---|
| | 0 | 1 | 2 | 3 | 4 | 5 | 6 | 7 | 8 | 9 |
| 0 | D | S | U | U | U | D | S | U | U | U |
| 1 | D | S | U | U | D | D | S | U | U | D |
| 2 | D | S | U | D | D | D | S | U | D | D |
| 3 | D | S | U | U | U | D | D | D | D | D |
| 4 | D | S | U | U | D | D | D | D | D | D |
| 5 | D | S | U | D | D | D | D | D | D | D |
| 6 | D | S | U | U | U | D | S | U | U | D |

Particularly the letter D represents a downlink time slot, the letter U represents an uplink time slot, and the letter S represents a special time slot. The configuration schemes 0, 1 and 2 each have a switching period of 5ms, and the configuration schemes 3 to 6 each have a switching period of 10ms. At present a piece of optional TDD system configuration information (TDD-Config) is defined in a System Information Block Type1 message (SIB1) in Section 6.2.2, Message Definition, of TS36.331 to include a TDD system uplink and downlink time slot assignment indicator (subframeAssignment) to indicate assignment of uplink and downlink time slots of a TDD system, and this parameter is omitted for an FDD system because the FDD system doesn't distinguish between time slots.

Taking as an example the guard frequency band of 2570 to 2580 MHz in Fig.3 and the assignment scheme 0 in Table 1, the network-side device can transmit uplink data over the carrier corresponding to the guard frequency band of 2570 to 2580 MHz to thereby ensure no interference arising with the FDD system in 2500 to 2570 MHz adjacent in frequency, but if uplink data is transmitted based upon TDD in all the time slots over the carrier corresponding to the guard frequency band, then the TDD system adjacent in frequency to the guard frequency band of 2570 to 2580 MHz transmits downlink data in both of the time slots corresponding to the sub-frame 0 according to the time slot configuration of the assignment scheme 0 in Table 1, and thus the guard frequency band of 2570 to 2580 MHz and the TDD system adjacent in frequency will transmit data in different directions at the same time (the two time slots corresponding to the sub-frame 0) and the same frequency (around the frequency of 2580 MHz) to thereby result in interference.

Thus in order to protect the TDD system adjacent in frequency against interference arising from transmission of data over the carrier corresponding to the guard frequency band, in an embodiment of the invention, the network-side device configures the communication configuration information for the carrier corresponding to the guard frequency band to include the direction in which data is transmitted in the simplex communication mode as the uplink direction particularly as follows: the network-side device searches for stored TDD-Config including subframeAssignment and carries TDD-Config including subframeAssignment in the configured communication configuration information to configure the same uplink and downlink time slots over the carrier corresponding to the guard frequency band as the TDD system adjacent in frequency. Moreover a downlink time slot disablement parameter is added in TDD-Config carried in the communication configuration information to disable the downlink time slots among the time slots configured over the carrier corresponding to the guard frequency band.

Particularly the downlink time slot disablement parameter added in TDD-Config can be a dl-disable parameter defined as 0 to indicate disabling of downlink time slots and 1 to indicate no disabling of downlink time slots. Of course, the parameter can alternatively be defined as 1 to indicate disabling of downlink time slots and 0 to indicate no disabling of downlink time slots.

At this time the network-side device transmits data based upon TDD over the carrier corresponding to the guard frequency band according to the communication configuration information particularly by configuring the same uplink and downlink time slots over the carrier corresponding to the guard frequency band as the TDD system adjacent in frequency based upon TDD according to subframeAssignment included in TDD-Config carried in the communication configuration information, disabling the downlink time slots among the configured time slots, selecting a time slot for transmission of uplink data among the configured uplink time slots and transmitting the uplink data in the selected time slot over the carrier corresponding to the guard frequency band.

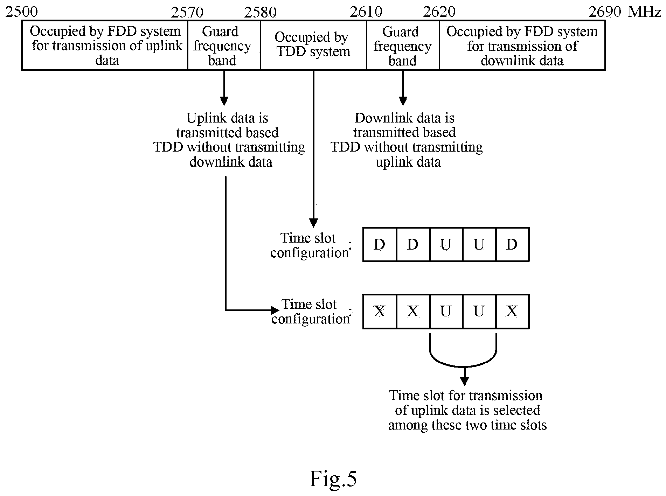

Fig.5 is a schematic diagram of configuring time slots, among which a downlink time slot is disabled, for a carrier corresponding to the guard frequency band in which uplink data is transmitted according to an embodiment of the invention, and as illustrated in Fig.5, when the network-side device transmits uplink data over the carrier corresponding to the guard frequency band of 2570 to 2580 MHz according to the communication configuration information configured for the carrier corresponding to the guard frequency band of 2570 to 2580 MHz, the network-side device configures the same uplink and downlink time slots over the carrier corresponding to the guard frequency band as the TDD system in 2580 to 2610 MHz adjacent in frequency according to subframeAssignment included in TDD-Config carried in the communication configuration information.

As illustrated in Fig.5, the assignment of uplink and downlink time slots adopted for the TDD system is the configuration of 2 uplink time slots and 3 downlink time slots, that is, the ratio of the uplink to downlink time slots is 2:3, where U represents each first time slot in which uplink data is transmitted, and D represents each second time slot in which downlink data is transmitted. Then the network-side device configures also the same time slots over the carrier corresponding to the guard frequency band of 2570 to 2580 MHz based upon TDD. The downlink time slots are disabled among the configured time slots, and X represents a disabled time slot in Fig.5. A time slot for transmission of uplink data is selected among the configured uplink time slots, that is, no more than 2 time slots for transmission of uplink data are selected over the carrier corresponding to the guard frequency band, and the location of the selected time slot shall be the same as the location of the first time slot of the TDD system.

Transmission of uplink data in the guard frequency band as above can ensure the same direction in which data is transmitted in the guard frequency band as the direction in which the TDD system adjacent in frequency transmits data at the same time (that is, in the same time slot), i.e., the uplink direction, and thus no interference will arise with the TDD system adjacent in frequency. Moreover the same direction in which data is transmitted in the guard frequency band as the direction in which the FDD system adjacent in frequency transmits data can also be ensured, and thus no interference will arise with the FDD system adjacent in frequency. Furthermore data is transmitted in the guard frequency bands useless in the prior art to thereby save the frequency resources.

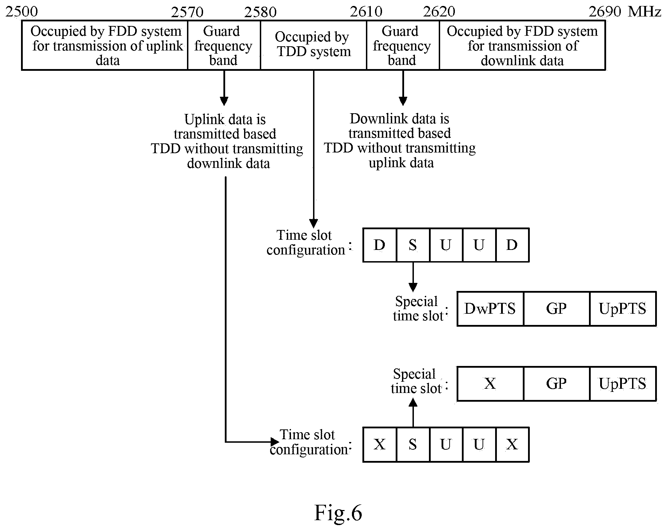

Also as depicted in Table 1, the time slots configured for the TDD system also include special time slots with DwPTS time slots in which downlink data is also transmitted, and thus in order to further prevent interference, the network-side device transmits uplink data based upon TDD over the carrier corresponding to the guard frequency band by also disabling a DwPTS time slot in a special time slot, if any, included among the time slots configured by the network-side device over the carrier corresponding to the guard frequency band as illustrated in Fig.6. Fig.6 is a schematic diagram of configuring time slots, among which a downlink time slot and a DwPTS time slot are disabled, for a carrier corresponding to the guard frequency band in which uplink data is transmitted according to an embodiment of the invention, and in Fig.6, the network-side device transmits uplink data over the carrier corresponding to the guard frequency of 2570 to 2580 MHz band, and since time slots including a special time slot are configured for the carrier corresponding to the guard frequency according to the communication configuration information configured for the carrier corresponding to the guard frequency, where S represents a special time slot including a DwPTS time slot, a GP time slot and an UpPTS time slot in Fig.6, the network-side device will also disable the DwPTS time slot to thereby ensure the TDD system adjacent in frequency to be protected against interference arising from transmission of uplink data in the guard frequency band.

Correspondingly the network-side device configures the communication configuration information for the carrier corresponding to the guard frequency band to include the direction in which data is transmitted in the simplex communication mode as the downlink direction particularly as follows: the network-side device searches for stored TDD-Config including subframeAssignment and carries TDD-Config including subframeAssignment in the configured communication configuration information to configure the same uplink and downlink time slots over the carrier corresponding to the guard frequency band as the TDD system adjacent in frequency. Moreover an uplink time slot disablement parameter is added in TDD-Config carried by the communication configuration information to disable the uplink time slots among the time slots configured over the carrier corresponding to the guard frequency band.

Particularly the uplink time slot disablement parameter added in TDD-Config can be an ul-disable parameter defined as 0 to indicate disabling of uplink time slots and 1 to indicate no disabling of uplink time slots. Of course, the parameter can alternatively be defined as 1 to indicate disabling of uplink time slots and 0 to indicate no disabling of uplink time slots.

At this time the network-side device transmits data based upon TDD over the carrier corresponding to the guard frequency band according to the communication configuration information particularly by configuring the same uplink and downlink time slots over the carrier corresponding to the guard frequency band as the TDD system adjacent in frequency based upon TDD according to subframeAssignment included in TDD-Config carried by the communication configuration information, disabling the uplink time slots among the configured time slots, selecting a time slot for transmission of downlink data among the configured downlink time slots and transmitting the downlink data in the selected time slot over the carrier corresponding to the guard frequency band.

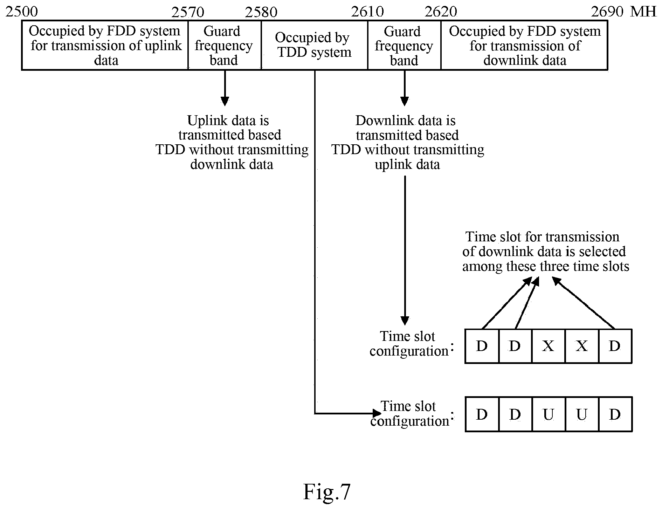

Fig.7 is a schematic diagram of configuring time slots, among which an uplink time slot is disabled, for a carrier corresponding to the guard frequency band in which downlink data is transmitted according to an embodiment of the invention, and as illustrated in Fig.7, when the network-side device transmits downlink data over the carrier corresponding to the guard frequency band of 2610 to 2620 MHz according to the communication configuration information configured for the carrier corresponding to the guard frequency band of 2610 to 2620 MHz, the network-side device configures the same uplink and downlink time slots over the carrier corresponding to the guard frequency band as the TDD system in 2580 to 2610 MHz adjacent in frequency according to subframeAssignment included in TDD-Config carried by the communication configuration information.

As illustrated in Fig.7, the assignment of uplink and downlink time slots adopted for the TDD system is the configuration of 2 uplink time slots and 3 downlink time slots, that is, the ratio of the uplink to downlink time slots is 2:3, where U represents each first time slot in which uplink data is transmitted, and D represents each second time slot in which downlink data is transmitted. Then the network-side device configures also the same time slots over the carrier corresponding to the guard frequency band of 2610 to 2620 MHz based upon TDD. The uplink time slots are disabled among the configured time slots, and X represents a disabled time slot in Fig.7. A time slot for transmission of downlink data is selected among the configured downlink time slots, that is, no more than 3 time slots for transmission of downlink data are selected over the carrier corresponding to the guard frequency band, and the location of the selected time slot shall be the same as the location of the second time slot of the TDD system.

Transmission of downlink data in the guard frequency band as above can ensure the same direction in which data is transmitted in the guard frequency band as the direction in which the TDD system adjacent in frequency transmits data at the same time (that is, in the same time slot), i.e., the downlink direction, and thus no interference will arise with the TDD system adjacent in frequency. Moreover the same direction in which data is transmitted in the guard frequency band as the direction in which the FDD system adjacent in frequency transmits data can also be ensured, and thus no interference will arise with the FDD system adjacent in frequency. Furthermore data is transmitted in the guard frequency bands useless in the prior art to thereby save the frequency resources.

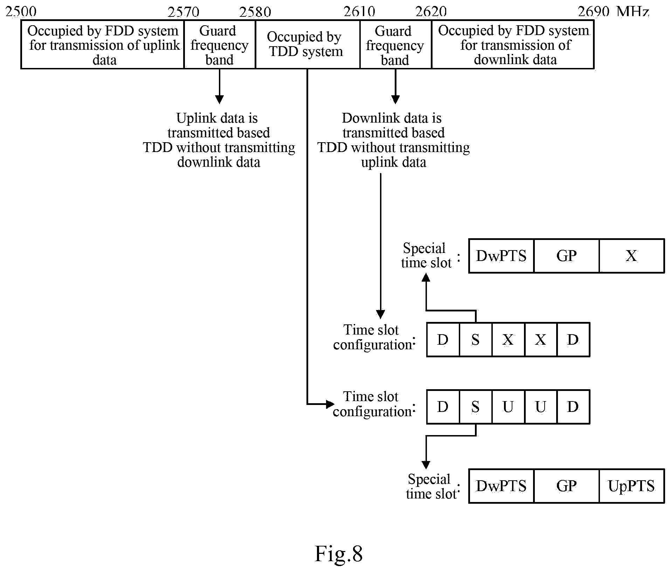

Moreover, similarly to transmission of uplink data in the guard frequency band, the network-side device transmits downlink data based upon TDD over the carrier corresponding to the guard frequency band by also disabling an UpPTS time slot in a special time slot, if any, included among the time slots configured by the network-side device over the carrier corresponding to the guard frequency band as illustrated in Fig.8. Fig.8 is a schematic diagram of configuring time slots, among which an uplink time slot and an UpPTS time slot are disabled, for a carrier corresponding to the guard frequency band in which downlink data is transmitted according to an embodiment of the invention, and in Fig.8, the network-side device transmits downlink data over the carrier corresponding to the guard frequency band of 2610 to 2620 MHz, and since time slots including a special time slot are configured for the carrier corresponding to the guard frequency according to the communication configuration information configured for the carrier corresponding to the guard frequency, where S represents a special time slot including a DwPTS time slot, a GP time slot and an UpPTS time slot in Fig.8, the network-side device will also disable the UpPTS time slot to thereby ensure the TDD system adjacent in frequency to be protected against interference arising from transmission of downlink data in the guard frequency band.

In the foregoing embodiments, the dl-disable parameter and the ul-disable parameter are added in TDD-Config to disable downlink or uplink time slots, and alternatively in an embodiment of the invention, only one parameter may be added in TDD-Config to disable downlink or uplink time slots. Specifically TDD-Configure has an ul-dl-disable parameter added therein, which is defined as 0 to indicate disabling of uplink time slots and transmission of downlink data in downlink time slots and 1 to indicate disabling of downlink time slots and transmission of uplink data in uplink time slots. Of course, the parameter can alternatively be defined as 1 to indicate disabling of uplink time slots and 0 to indicate disabling of downlink time slots.

In an embodiment of the invention, when the network-side device configures the communication configuration information for the carrier corresponding to the guard frequency band and transmits uplink data or downlink data over the carrier corresponding to the guard frequency band according to the communication configuration information as above, a user equipment shall also be ensured to transmit uplink data or downlink data using the corresponding method; otherwise, transmission of uplink data or downlink data by the user equipment over an incorrect carrier or in an incorrect time slot might degrade the accuracy of data transmission and also interfere with the FDD system and the TDD system adjacent in frequency, and thus the network-side device will also transmit the communication configuration information to the user equipment to instruct the user equipment to transmit data according to the received communication configuration information.

Specifically, when the network-side device configures the communication configuration information for the carrier corresponding to the guard frequency band to include the direction in which data is transmitted as the uplink direction, the network-side device adds in TDD-Config carried in the communication configuration information a central frequency indicator parameter (EARFCN) of the carrier corresponding to the guard frequency band, carries the communication configuration information with EARFCN added therein in broadcast information and bears the broadcast information over another carrier than the carrier corresponding to the guard frequency band for transmission to the user equipment to instruct the user equipment to transmit data over the carrier corresponding to the guard frequency band according to the received communication configuration information. That is, the network-side device transmits the communication configuration information to the user equipment in the form of a broadcast, where downlink time slots have been disabled and only uplink data can be transmitted over the carrier corresponding to the guard frequency band, the communication configuration information cannot be broadcasted to the user equipment over the carrier corresponding to the guard frequency band but shall be broadcasted over another carrier. Of course, the communication configuration information can alternatively be transmitted in another form, for example, in dedicated signaling.

Then the user equipment determines the carrier corresponding to the guard frequency band according to EARFCN in TDD-Config carried in the received communication configuration information, configures uplink and downlink time slots for the carrier corresponding to the guard frequency band according to subframeAssignment in the TDD-Config, disables the configured downlink time slots according to the downlink time slot disablement parameter in TDD-Config and transmits uplink data based upon TDD over the carrier corresponding to the guard frequency band.

Correspondingly when the network-side device configures the communication configuration information for the carrier corresponding to the guard frequency band to include the direction in which data is transmitted in the simplex communication mode as the downlink direction, the network-side device carries the communication configuration information in broadcast information and bears the broadcast information over the carrier corresponding to the guard frequency band for transmission to the user equipment to instruct the user equipment to transmit data over the carrier corresponding to the guard frequency band according to the received communication configuration information. That is, the network-side device transmits the communication configuration information to the user equipment in the form of a broadcast, and at this time since uplink time slots have been disabled and downlink data can be transmitted over the carrier corresponding to the guard frequency band, the communication configuration information can be broadcasted to the user equipment directly over the carrier corresponding to the guard frequency band. Of course, the communication configuration information can alternatively be broadcasted over another carrier or transmitted in another form, for example, in dedicated signaling.

As can be apparent from Fig.5, Fig.6, Fig.7 and Fig.8 above, the embodiments of the invention essentially extend the frequency band of 2580 to 2610 MHz occupied by the traditional TDD system for transmission of data to the frequency band of 2570 to 2620 MHz, but only uplink data can be transmitted in the frequency band of 2570 to 2580 MHz with all the time slots and downlink pilot time slots for transmission of downlink data being disabled, and only downlink data can be transmitted in the frequency band of 2610 to 2620 MHz with all the time slots and uplink pilot time slots in which uplink data is transmitted being disabled. As compared with the situation in which uplink data and downlink data is transmitted in totally the same frequency band in the existing traditional TDD system, the invention proposes the foregoing TDD system with the extended frequency band, which can be referred to as a frequency-offset asymmetric Time Division Duplex (offset TDD) wireless communication system for which the same time slot configuration schemes and temporal synchronization requirement as the existing traditional TDD system are adopted. Also the uplink and downlink frequency bands are set asymmetric in view of practical network deployment demands, that is, the uplink frequency band is essentially the frequency band of 2570 to 2610 MHz, whereas the downlink frequency band is essentially the frequency band of 2580 to 2620 MHz, and both uplink data and downlink data is transmitted in the frequency band of 2580 to 2610 MHz by which the two frequency bands overlap, and only uplink data or downlink data is transmitted as above in the non-overlapping frequency bands, where the carrier corresponding to the non-overlapping frequency band of 2570 to 2580 MHz and the carrier corresponding to the non-overlapping frequency band of 2610 to 2620 MHz can be referred to as special carriers.

Particularly the uplink and downlink frequency bands of the offset TDD system can be set in view of the following practical network deployment demands:
1. System characteristics of another system deployed in combination with the offset TDD system, where the another system includes the FDD system, and the system characteristics include, for example, a configuration of uplink and downlink resources, a bandwidth of subband, transmission power, a radio frequency index, etc.; and
2. A situation in which a signal component of another system may possibly fall into a frequency band of the offset TDD system.

Furthermore the uplink and downlink frequency bands of the offset TDD system according to the invention may or may not include overlapping frequency bands; the uplink and downlink frequency bands can be wider or narrower than the uplink and downlink frequency bands of the traditional TDD system; the bandwidths of the uplink and downlink frequency bands may be same or different; frequency bands occupied by the uplink and downlink frequency bands can be consecutive or inconsecutive possibly at one or more breaking points; and the numbers of breaking points of the uplink and downlink frequency bands may be the same or different; and the frequency bands occupied by breaking points of the uplink and downlink frequency bands may or may not overlap. That is, the uplink and downlink frequency bands of the offset TDD system can be configured flexibly as necessary to thereby facilitate improved uplink and downlink interference in the operating frequency bands or at the edges thereof when the offset TDD system and the other system (e.g., the FDD system) are deployed in combination.

With the foregoing implementations, an application of the offset TDD system can be effectively supported just with minor modification to the existing system.

Moreover based upon the same idea, in Fig.5, Fig.6, Fig.7 and Fig.8 above, the frequency band of 2570 to 2580 MHz can also be an extended uplink frequency band of the FDD system adjacent in frequency and used together with the FDD system occupying the frequency band of 2500 to 2570 MHz, and again uplink data can be transmitted only in the same time slots as those in which the TDD system adjacent in frequency transmits uplink data, whereas the downlink time slots are disabled. Correspondingly the frequency band of 2610 to 2620 MHz can also be an extended downlink frequency band of the FDD system adjacent in frequency and used together with the FDD system occupying the frequency band of 2620 to 2690 MHz, and again downlink data can be transmitted only in the same time slots as those in which the TDD system adjacent in frequency transmits downlink data, whereas the uplink time slots are disabled, and a repeated description thereof will be omitted here.

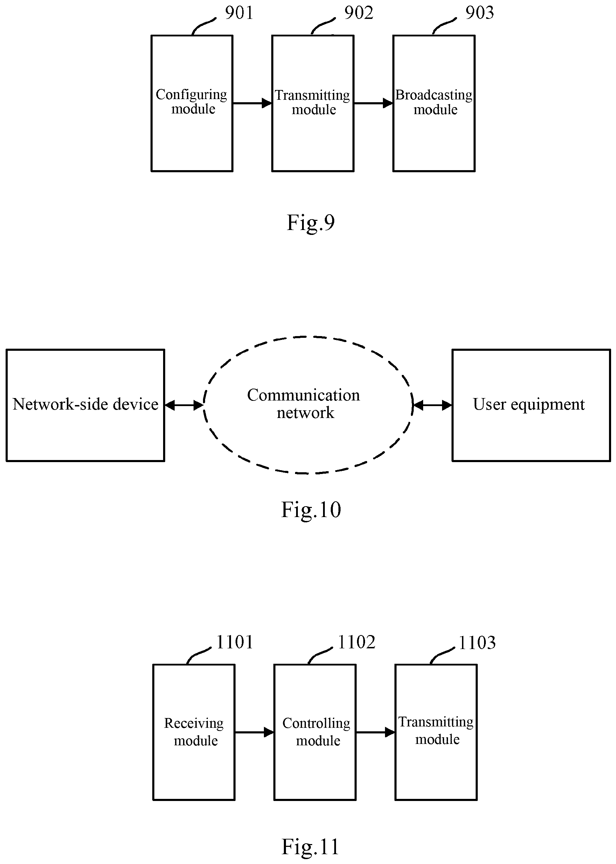

Fig.9 is a schematic structural diagram of a data transmission apparatus according to an embodiment of the invention, which particularly includes:

A configuring module 901 configured, for each of guard frequency bands between a Time Division Duplex (TDD) system and a Frequency Division Duplex (FDD) system, to configure communication configuration information for a carrier corresponding to the guard frequency band, where the communication configuration information includes the direction in which data is transmitted in a simplex communication mode over the carrier corresponding to the guard frequency band; and

A transmitting module 902 configured to transmit data based upon TDD over the carrier corresponding to the guard frequency band in the direction of data transmission included in the configured communication configuration information.

The configuring module 901 is further configured to determine the direction in which the FDD system transmits data in a first frequency band adjacent in frequency to the guard frequency band, where the direction of data transmission by the FDD system includes an uplink direction and a downlink direction; and when the direction in which the FDD system transmits data in the first frequency band is determined as the uplink direction, to configure the communication configuration information for the carrier corresponding to the guard frequency band to include the direction in which data is transmitted in the simplex communication mode as the uplink direction, and when the direction in which the FDD system transmits data in the first frequency band is determined as the downlink direction, to configure the communication configuration information for the carrier corresponding to the guard frequency band to include the direction in which data is transmitted in the simplex communication mode as the downlink direction.

The configuring module 901 is further configured to search for stored TDD system configuration information TDD-Config including a TDD system uplink and downlink time slot assignment indicator subframeAssignment, to carry TDD-Config including subframeAssignment in the configured communication configuration information to configure the same uplink and downlink time slots over the carrier corresponding to the guard frequency band as the TDD system, and to add a downlink time slot disablement parameter in TDD-Config carried by the communication configuration information to disable the downlink time slots among the time slots configured over the carrier corresponding to the guard frequency band.

The configuring module 901 is further configured to add in TDD-Config carried by the communication configuration information a central frequency indicator parameter EARFCN of the carrier corresponding to the guard frequency band.

The apparatus further includes:
A broadcasting module 903 configured to carry the communication configuration information with EARFCN added therein in broadcast information, and to bear the broadcast information over another carrier than the carrier corresponding to the guard frequency band for transmission to the user equipment to instruct the user equipment to transmit data over the carrier corresponding to the guard frequency band according to the received communication configuration information.

The configuring module 901 is further configured to search for stored TDD system configuration information TDD-Config including a TDD system uplink and downlink time slot assignment indicator subframeAssignment, to carry TDD-Config including subframeAssignment in the configured communication configuration information to configure the same uplink and downlink time slots over the carrier corresponding to the guard frequency band as the TDD system, and to add an uplink time slot disablement parameter in TDD-Config carried by the communication configuration information to disable the uplink time slots among the time slots configured over the carrier corresponding to the guard frequency band.

The apparatus further includes:
A broadcasting module 903 configured to carry the communication configuration information in broadcast information, and to bear the broadcast information over the carrier corresponding to the guard frequency band for transmission to the user equipment to instruct the user equipment to transmit data over the carrier corresponding to the guard frequency band according to the received communication configuration information.

An embodiment of the invention further provides a network-side device including the data transmission apparatus as described above.

Fig.10 is a schematic structural diagram of a wireless communication system according to an embodiment of the invention, which includes a network-side device, a user equipment and a communication network connecting the network-side device and the user equipment.

Particularly the network-side device is configured to configure communication configuration information for carriers corresponding to respective guard frequency bands between a TDD system and an FDD system and to transmit data according to the configured communication configuration information as above, and a repeated description thereof will be omitted here. Moreover the network-side device is further configured to transmit the communication configuration information to the user equipment. The user equipment is configured to receive the communication configuration information transmitted from the network-side device, to configure corresponding time slots and disable corresponding time slots for the carriers of the respective guard frequency bands according to the received communication configuration information, to select time slots for transmission of data and to transmit the data to the network-side device in the corresponding time slots of the respective carriers.

Based upon the same idea, an embodiment of the invention further provides a user equipment as illustrated in Fig.11. Fig.11 is a schematic structural diagram of a user equipment according to an embodiment of the invention, which includes a receiving module 1101, a controlling module 1102 and a transmitting module 1103, where the receiving module 1101 is configured to receive communication configuration information transmitted from a network-side device, the controlling module 1102 is configured to configure corresponding time slots and disable corresponding time slots for carriers of respective guard frequency bands according to the received communication configuration information received by the receiving module 1101, and to select time slots for transmission of data, and the transmitting module 1103 is configured to transmit the data to the network-side device in the time slots configured by the controlling module 1102.

The embodiments of the invention provide a data transmission method and apparatus, and in the method, for each of guard frequency bands between a Time Division Duplex (TDD) system and a Frequency Division Duplex (FDD) system, a network-side device configures communication configuration information for a carrier corresponding to the guard frequency band, where the communication configuration information includes the direction in which data is transmitted in a simplex communication mode over the carrier corresponding to the guard frequency band, and transmits data based upon TDD over the carrier corresponding to the guard frequency band in the direction of data transmission included in the configured communication configuration information. Since data is transmitted in the simplex communication mode based upon TDD in the guard frequency band according to the communication configuration information in the embodiments of the invention, the FDD system adjacent in frequency will be protected against mutual interference arising from transmission of data in the guard frequency band, and transmission of the data over a frequency resource of the guard frequency band can also save the frequency resource.

The foregoing description is merely illustrative of the preferred embodiments of the invention but not intended to limit the invention, and any modifications, equivalent substitutions, adaptations, etc., which can be made without departing from the principle of the invention shall be encompassed in the claimed scope of the invention.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

## Claims

1. A data transmission method comprising the steps of:
for each of guard frequency bands between a Time Division Duplex, TDD, system and a Frequency Division Duplex, FDD, system, configuring (S201), by a network-side device, communication configuration information for a carrier corresponding to the guard frequency band, wherein the communication configuration information comprises the direction in which data is transmitted in a simplex communication mode over the carrier corresponding to the guard frequency band; and
transmitting (S202) data using TDD technique over the carrier corresponding to the guard frequency band in the direction of data transmission comprised in the configured communication configuration information;
wherein:
configuring (S201) the communication configuration information, comprising the direction of data transmission, for the carrier corresponding to the guard frequency band comprises:
determining, by the network-side device, the direction in which the FDD system transmits data in a first frequency band adjacent in frequency to the guard frequency band, wherein the direction of data transmission by the FDD system comprises an uplink direction and a downlink direction; when the direction in which the FDD system transmits data in the first frequency band is determined as the uplink direction, configuring the communication configuration information for the carrier corresponding to the guard frequency band to comprise the direction in which data is transmitted in the simplex communication mode as the uplink direction; and when the direction in which the FDD system transmits data in the first frequency band is determined as the downlink direction, configuring the communication configuration information for the carrier corresponding to the guard frequency band to comprise the direction in which data is transmitted in the simplex communication mode as the downlink direction;
the method further **characterized in that**,
when the direction in which data is transmitted in the simplex communication mode and which is comprised by the communication configuration information for the carrier corresponding to the guard frequency band is the uplink direction, then adding, by the network-side device, in TDD-Config carried by the communication configuration information a central frequency indicator parameter EARFCN of the carrier corresponding to the guard frequency band; and carrying the communication configuration information with EARFCN added therein in broadcast information, and bearing the broadcast information over another carrier than the carrier corresponding to the guard frequency band for transmission to the user equipment to instruct the user equipment to transmit data over the carrier corresponding to the guard frequency band according to the received communication configuration information.

2. The method according to claim 1, wherein configuring the communication configuration information for the carrier corresponding to the guard frequency band to comprise the direction in which data is transmitted in the simplex communication mode as the uplink direction comprises:
searching for, by the network-side device, a stored TDD system configuration information TDD-Config comprising a TDD system uplink and downlink time slot assignment indicator subframeAssignment;
carrying the TDD-Config comprising subframeAssignment in the configured communication configuration information to configure the same uplink and downlink time slots over the carrier corresponding to the guard frequency band as the TDD system; and
adding a downlink time slot disablement parameter in the TDD-Config carried by the communication configuration information to disable the downlink time slots among the time slots configured over the carrier corresponding to the guard frequency band.

3. The method according to claim 1, wherein configuring the communication configuration information for the carrier corresponding to the guard frequency band to comprise the direction in which data is transmitted in the simplex communication mode as the downlink direction further comprises:
searching for, by the network-side device, a stored TDD system configuration information TDD-Config comprising a TDD system uplink and downlink time slot assignment indicator subframeAssignment;
carrying the TDD-Config comprising subframeAssignment in the configured communication configuration information to configure the same uplink and downlink time slots over the carrier corresponding to the guard frequency band as the TDD system; and
adding an uplink time slot disablement parameter in the TDD-Config carried by the communication configuration information to disable the uplink time slots among the time slots configured over the carrier corresponding to the guard frequency band.

4. The method according to claim 3, further comprising:
carrying, by the network-side device, the communication configuration information in broadcast information, and bearing the broadcast information over the carrier corresponding to the guard frequency band for transmission to the user equipment to instruct the user equipment to transmit data over the carrier corresponding to the guard frequency band according to the received communication configuration information.

5. A data transmission apparatus comprising:
a configuring module (901) configured, for each of guard frequency bands between a Time Division Duplex, TDD, system and a Frequency Division Duplex, FDD, system, to configure communication configuration information for a carrier corresponding to the guard frequency band, wherein the communication configuration information comprises the direction in which data is transmitted in a simplex communication mode over the carrier corresponding to the guard frequency band; and
a transmitting module (902) configured to transmit data using TDD technique over the carrier corresponding to the guard frequency band in the direction of data transmission comprised in the configured communication configuration information;
wherein:
the configuring module (901) is further configured to determine the direction in which the FDD system transmits data in a first frequency band adjacent in frequency to the guard frequency band, wherein the direction of data transmission by the FDD system comprises an uplink direction and a downlink direction; and when the direction in which the FDD system transmits data in the first frequency band is determined as the uplink direction, to configure the communication configuration information for the carrier corresponding to the guard frequency band to comprise the direction in which data is transmitted in the simplex communication mode as the uplink direction, and when the direction in which the FDD system transmits data in the first frequency band is determined as the downlink direction, to configure the communication configuration information for the carrier corresponding to the guard frequency band to comprise the direction in which data is transmitted in the simplex communication mode as the downlink direction;
the apparatus further comprises a broadcasting module (903);
when the direction in which the FDD system transmits data in the first frequency band is determined as the uplink direction, the configuring module (901) is further configured to add in TDD-Config carried by the communication configuration information a central frequency indicator parameter EARFCN of the carrier corresponding to the guard frequency band; and
**characterized in that** the broadcasting module (903) is further configured to carry the communication configuration information with EARFCN added therein in broadcast information, and to bear the broadcast information over another carrier than the carrier corresponding to the guard frequency band for transmission to the user equipment to instruct the user equipment to transmit data over the carrier corresponding to the guard frequency band according to the received communication configuration information.

6. The apparatus according to claim 5, wherein when the direction in which the FDD system transmits data in the first frequency band is determined as the uplink direction, the configuring module (901) is further configured to search for a stored TDD system configuration information TDD-Config comprising a TDD system uplink and downlink time slot assignment indicator subframeAssignment, to carry the TDD-Config comprising subframeAssignment in the configured communication configuration information to configure the same uplink and downlink time slots over the carrier corresponding to the guard frequency band as the TDD system, and to add a downlink time slot disablement parameter in the TDD-Config carried by the communication configuration information to disable the downlink time slots among the time slots configured over the carrier corresponding to the guard frequency band.

7. The apparatus according to claim 5, wherein when the direction in which the FDD system transmits data in the first frequency band is determined as the downlink direction, the configuring module (901) is further configured to search for a stored TDD system configuration information TDD-Config comprising a TDD system uplink and downlink time slot assignment indicator subframeAssignment, to carry the TDD-Config comprising subframeAssignment in the configured communication configuration information to configure the same uplink and downlink time slots over the carrier corresponding to the guard frequency band as the TDD system, and to add an uplink time slot disablement parameter in the TDD-Config carried by the communication configuration information to disable the uplink time slots among the time slots configured over the carrier corresponding to the guard frequency band.

8. The apparatus according to claim 7, wherein the broadcasting module (903) configured to carry the communication configuration information in broadcast information, and to bear the broadcast information over the carrier corresponding to the guard frequency band for transmission to the user equipment to instruct the user equipment to transmit data over the carrier corresponding to the guard frequency band according to the received communication configuration information.

9. A network-side device, comprising the data transmission apparatus according to any one of claims 5 to 8.

## Patentansprüche

1. Datenübertragungsverfahren, umfassend die Schritte:
durch eine netzseitige Vorrichtung für jedes der Schutzfrequenzbänder zwischen einem Zeitduplexsystem (Time Division Duplex system, TDD-System) und einem Frequenzduplexsystem (Frequency Division Duplex system, FDD-System) Konfigurieren (S201) von Kommunikationskonfigurationsinformationen für einen dem Schutzfrequenzband entsprechenden Träger, wobei die Kommunikationskonfigurationsinformationen die Richtung umfassen, in der Daten in einem Simplex-Kommunikationsmodus über den dem Schutzfrequenzband entsprechenden Träger übertragen werden; und
Übertragen (S202) von Daten unter Verwendung der TDD-Technik über den dem Schutzfrequenzband entsprechenden Träger in der Richtung der Datenübertragung, die in den konfigurierten Kommunikationskonfigurationsinformationen enthalten ist;
wobei:
das Konfigurieren (S201) der Kommunikationskonfigurationsinformationen, die die Richtung der Datenübertragung umfassen, für den dem Schutzfrequenzband entsprechenden Träger umfassen:
durch die netzseitige Vorrichtung Ermitteln der Richtung, in der das FDD-System Daten in einem an das Schutzfrequenzband angrenzenden ersten Frequenzband überträgt, wobei die Richtung der Datenübertragung durch das FDD-System eine Uplinkrichtung und eine Downlinkrichtung umfasst; wenn die Richtung, in der das FDD-System Daten im ersten Frequenzband überträgt, als Uplinkrichtung ermittelt wird, Konfigurieren der Kommunikationskonfigurationsinformationen für den dem Schutzfrequenzband entsprechenden Träger, um die Richtung zu umfassen, in der Daten im Simplex-Kommunikationsmodus als Uplinkrichtung übertragen werden; und wenn die Richtung, in der das FDD-System Daten im ersten Frequenzband überträgt, als Downlinkrichtung ermittelt wird, Konfigurieren der Kommunikationskonfigurationsinformationen für den dem Schutzfrequenzband entsprechenden Träger, um die Richtung zu umfassen, in der Daten im Simplex-Kommunikationsmodus als Downlinkrichtung übertragen werden;
wobei das Verfahren ferner **dadurch gekennzeichnet ist, dass**,
wenn die Richtung, in der Daten im Simplex-Kommunikationsmodus übertragen werden und die in den Kommunikationskonfigurationsinformationen für den dem Schutzfrequenzband entsprechenden Träger enthalten ist, die Uplinkrichtung ist, durch die netzseitige Vorrichtung Hinzufügen in der TDD-Config, die durch Kommunikationskonfigurationsinformationen transportiert werden, eines Mittenfrequenzangabeparameters EARFCN des dem Schutzfrequenzband entsprechenden Trägers; und Transportieren der Kommunikationskonfigurationsinformationen mit darin hinzugefügtem EARFCN in Rundsendeinformationen und Übermitteln der Rundsendeinformationen über einen anderen Träger als den dem Schutzfrequenzband entsprechenden Träger zur Übertragung zum Benutzergerät, um das Benutzergerät anzuweisen, Daten über den dem Schutzfrequenzband entsprechenden Träger gemäß den empfangenen Kommunikationskonfigurationsinformationen zu übertragen.

2. Verfahren nach Anspruch 1, wobei das Konfigurieren der Kommunikationskonfigurationsinformationen für den dem Schutzfrequenzband entsprechenden Träger, um die Richtung zu umfassen, in der Daten im Simplex-Kommunikationsmodus als Uplinkrichtung übertragen werden, umfasst:
durch die netzseitige Vorrichtung Suchen nach gespeicherten TDD-Systemkonfigurationsinformationen TDD-Config, die eine Uplink- und Downlink-Zeitfensterzuweisungsangabe subframeAssignment des TDD-Systems umfassen;
Transportieren der TDD-Config, die die subframeAssignment in den konfigurierten Kommunikationskonfigurationsinformationen umfasst, um dieselben Uplink- und Downlinkzeitfenster wie die des TDD-Systems über den dem Schutzfrequenzband entsprechenden Träger zu konfigurieren; und
Hinzufügen eines Downlink-Zeitfensterdeaktivierungsparameters in der TDD-Config, die durch die Kommunikationskonfigurationsinformationen transportiert wird, um die Downlinkzeitfenster unter den Zeitfenstern zu deaktivieren, die über den dem Schutzfrequenzband entsprechenden Träger konfiguriert wurden.

3. Verfahren nach Anspruch 1, wobei das Konfigurieren der Kommunikationskonfigurationsinformationen für den dem Schutzfrequenzband entsprechenden Träger, um die Richtung zu umfassen, in der Daten im Simplex-Kommunikationsmodus als Downlinkrichtung übertragen werden, ferner umfasst:
durch die netzseitige Vorrichtung Suchen nach gespeicherten TDD-Systemkonfigurationsinformationen TDD-Config, die eine Uplink- und Downlink-Zeitfensterzuweisungsangabe subframeAssignment des TDD-Systems umfassen;
Transportieren der TDD-Config, die die subframeAssignment in den konfigurierten Kommunikationskonfigurationsinformationen umfasst, um dieselben Uplink- und Downlinkzeitfenster wie die des TDD-Systems über den dem Schutzfrequenzband entsprechenden Träger zu konfigurieren; und
Hinzufügen eines Uplink-Zeitfensterdeaktivierungsparameters in der TDD-Config, die durch die Kommunikationskonfigurationsinformationen transportiert wird, um die Downlinkzeitfenster unter den Zeitfenstern zu deaktivieren, die über den dem Schutzfrequenzband entsprechenden Träger konfiguriert wurden.

4. Verfahren nach Anspruch 3, ferner umfassend:
durch die netzseitige Vorrichtung Transportieren der Kommunikationskonfigurationsinformationen in den Rundsendeinformationen und Übermitteln der Rundsendeinformationen über den dem Schutzfrequenzband entsprechenden Träger zur Übertragung zum Benutzergerät, um das Benutzergerät anzuweisen, Daten über den dem Schutzfrequenzband entsprechenden Träger gemäß den empfangenen Kommunikationskonfigurationsinformationen zu übertragen.

5. Datenübertragungseinrichtung, umfassend:
ein Konfigurationsmodul (901), das konfiguriert ist, um für jedes der Schutzfrequenzbänder zwischen einem Zeitduplex-System (TDD-System) und einem Frequenzduplexsystem (FDD-System) Kommunikationskonfigurationsinformationen für einen dem Schutzfrequenzband entsprechenden Träger zu konfigurieren, wobei die Kommunikationskonfigurationsinformationen die Richtung umfassen, in der Daten in einem Simplex-Kommunikationsmodus über den dem Schutzfrequenzband entsprechenden Träger übertragen werden; und
ein Übertragungsmodul (902), das konfiguriert ist, um Daten unter Verwendung der TDD-Technik über den dem Schutzfrequenzband entsprechenden Träger in der Richtung der Datenübertragung zu übertragen, die in den konfigurierten Kommunikationskonfigurationsinformationen enthalten ist;
wobei:
das Konfigurationsmodul (901) ferner konfiguriert ist, um die Richtung zu ermitteln, in der das FDD-System Daten in einem an das Schutzfrequenzband angrenzenden ersten Frequenzband sendet, wobei die Richtung der Datenübertragung durch das FDD-System eine Uplinkrichtung und eine Downlinkrichtung umfasst; und wenn die Richtung, in der das FDD-System Daten im ersten Frequenzband überträgt, als Uplinkrichtung ermittelt wird, die Kommunikationskonfigurationsinformationen für den dem Schutzfrequenzband entsprechenden Träger zu konfigurieren, um die Richtung zu umfassen, in der Daten im Simplex-Kommunikationsmodus als Uplinkrichtung übertragen werden; und wenn die Richtung, in der das FDD-System Daten im ersten Frequenzband überträgt, als Downlinkrichtung ermittelt wird, die Kommunikationskonfigurationsinformationen für den dem Schutzfrequenzband entsprechenden Träger zu konfigurieren, um die Richtung zu umfassen, in der Daten im Simplex-Kommunikationsmodus als Downlinkrichtung übertragen werden;
die Einrichtung ferner ein Rundsendemodul (903) umfasst;
wenn die Richtung, in der das FDD-System Daten im ersten Frequenzband überträgt, als Uplinkrichtung ermittelt wird, das Konfigurationsmodul (901) ferner konfiguriert ist, um in der TDD-Config, die durch die Kommunikationskonfigurationsinformationen transportiert wird, einen Mittenfrequenzangabeparameter EARFCN des dem Schutzfrequenzband entsprechenden Trägers hinzuzufügen; und
**dadurch gekennzeichnet, dass**
das Rundsendemodul (903) ferner konfiguriert ist, um die Kommunikationskonfigurationsinformationen mit dem darin hinzugefügten EARFCN in Rundsendeinformationen zu transportieren und die Rundsendeinformationen über einen anderen Träger als den dem Schutzfrequenzband entsprechenden Träger zur Übertragung zum Benutzergerät zu übermitteln, um das Benutzergerät anzuweisen, Daten über den dem Schutzfrequenzband entsprechenden Träger gemäß den empfangenen Kommunikationskonfigurationsinformationen zu übertragen.

6. Einrichtung nach Anspruch 5, wobei, wenn die Richtung, in der das FDD-System Daten im ersten Frequenzband sendet, als Uplinkrichtung ermittelt wird, das Konfigurationsmodul (901) ferner konfiguriert ist, um nach gespeicherten TDD-Systemkonfigurationsinformationen TDD-Config zu suchen, die eine Uplink- und Downlink-Zeitfensterzuweisungsangabe subframeAssignment des TDD-Systems umfassen, um die TDD-Config zu transportieren, die die subframeAssignment in den konfigurierten Kommunikationskonfigurationsinformationen umfassen, um dieselben Uplink- und Downlinkzeitfenster wie die des TDD-Systems über den dem Schutzfrequenzband entsprechenden Träger zu konfigurieren und einen Downlink-Zeitfensterdeaktivierungsparameter in der TDD-Config hinzuzufügen, die durch die Kommunikationskonfigurationsinformationen transportiert wird, um die Downlinkzeitfenster unter den Zeitfenstern zu deaktivieren, die über den dem Schutzfrequenzband entsprechenden Träger konfiguriert wurden.

7. Einrichtung nach Anspruch 5, wobei, wenn die Richtung, in der das FDD-System Daten im ersten Frequenzband sendet, als Downlinkrichtung ermittelt wird, das Konfigurationsmodul (901) ferner konfiguriert ist, um nach gespeicherten TDD-Systemkonfigurationsinformationen TDD-Config zu suchen, die eine Uplink- und Downlink-Zeitfensterzuweisungsangabe subframeAssignment des TDD-Systems umfassen, um die TDD-Config zu transportieren, die die subframeAssignment in den konfigurierten Kommunikationskonfigurationsinformationen umfassen, um dieselben Uplink- und Downlinkzeitfenster wie die des TDD-Systems über den dem Schutzfrequenzband entsprechenden Träger zu konfigurieren und einen Uplink-Zeitfensterdeaktivierungsparameter in der TDD-Config hinzuzufügen, die durch die Kommunikationskonfigurationsinformationen transportiert wird, um die Uplinkzeitfenster unter den Zeitfenstern zu deaktivieren, die über den dem Schutzfrequenzband entsprechenden Träger konfiguriert wurden.

8. Einrichtung nach Anspruch 7, wobei das Rundsendemodul (903) konfiguriert ist, um die Kommunikationskonfigurationsinformationen in Rundsendeinformationen zu transportieren und die Rundsendeinformationen über den dem Schutzfrequenzband entsprechenden Träger zur Übertragung zum Benutzergerät zu übermitteln, um das Benutzergerät anzuweisen, Daten über den dem Schutzfrequenzband entsprechenden Träger gemäß den empfangenen Kommunikationskonfigurationsinformationen zu übertragen.

9. Netzseitige Vorrichtung, umfassend die Datenübertragungseinrichtung nach einem der Ansprüche 5 bis 8.

## Revendications

1. Procédé de transmission de données comprenant les étapes suivantes :
pour chacune des bandes de fréquence de garde entre un système de duplex par répartition dans le temps (TDD) et un système de duplex par répartition en fréquence (FDD), la configuration (S201), par un dispositif côté réseau, des informations de configuration de communication pour une porteuse correspondant à la bande de fréquence de garde, les informations de configuration de communication comprenant le sens dans lequel des données sont transmises dans un mode de communication simplex sur la porteuse correspondant à la bande de fréquence de garde ; et
la transmission (S202) de données à l'aide de la technique TDD sur la porteuse correspondant à la bande de fréquence de garde dans le sens de transmission de données comprise dans les informations de configuration de communication configurées ;
la configuration (S201) des informations de configuration de communication, comprenant le sens de la transmission de données pour la porteuse correspondant à la bande de fréquence de garde, comprenant :
la détermination, par le dispositif côté réseau, du sens dans lequel le système FDD transmet des données dans une première bande de fréquence adjacente en fréquence à la bande de fréquence de garde, le sens de transmission de données par le système FDD comprenant un sens de liaison montante et un sens de liaison descendante ; lorsque le sens dans lequel le système FDD transmet des données dans la première bande de fréquence est déterminé comme sens de liaison montante, la configuration des informations de configuration de communication pour la porteuse correspondant à la bande de fréquence de garde afin d'intégrer le sens dans lequel des données sont transmises en mode de communication simplex comme sens de la liaison montante ; et lorsque le sens dans lequel le système FDD transmet des données dans la première bande de fréquence est déterminé comme sens de liaison descendante, la configuration des informations de configuration de communication pour la porteuse correspondant à la bande de fréquence de garde, afin d'intégrer le sens dans lequel des données sont transmises dans le mode de communication simplex comme sens de liaison descendante ;
le procédé étant en outre **caractérisé en ce que**
lorsque le sens dans lequel des données sont transmises dans le mode de communication simplex et qui est composé des informations de configuration de communication pour la porteuse correspondant à la bande de fréquence de garde est le sens de liaison montante, l'ajout, par le dispositif côté réseau, dans la TDD-Config transportée par les informations de configuration de communication, d'un paramètre indicateur de fréquence centrale EARFCN de la porteuse correspondant à la bande de fréquence de garde ; et le transport des informations de configuration de communication avec l'EARFCN qui y est ajouté dans des informations de diffusion et portant les informations de diffusion sur une porteuse autre que la porteuse correspondant à la bande de fréquence de garde, pour transmission à l'équipement utilisateur afin d'ordonner à l'équipement utilisateur de transmettre des données sur la porteuse correspondant à la bande de fréquence de garde, en fonction des informations de configuration de communication reçues.

2. Procédé selon la revendication 1, dans lequel la configuration des informations de configuration de communication pour la porteuse correspondant à la bande de fréquence de garde, afin d'intégrer le sens dans lequel les données sont transmises dans le mode de communication simplex comme sens de liaison montante, comprend :
la recherche, par le dispositif côté réseau, d'une information de configuration de système TDD stockée (TDD-Config), comprenant un indicateur d'attribution d'intervalle de temps en liaison montante et en liaison descendante de système TDD (subframeAssignment) ;
le transport du TDD-Config comprenant un subframeAssignment dans les informations de configuration de communication configurées pour configurer les mêmes intervalles de temps en liaison montante et en liaison descendante sur la porteuse correspondant à la bande de fréquence de garde en tant que système TDD ; et
l'ajout d'un paramètre de désactivation d'intervalle de temps en liaison descendante dans le TDD-Config transporté par les informations de configuration de communication, pour désactiver les intervalles de temps en liaison descendante parmi les intervalles de temps configurés sur la porteuse correspondant à la bande de fréquence de garde.

3. Procédé selon la revendication 1, dans lequel la configuration des informations de configuration de communication pour la porteuse correspondant à la bande de fréquence de garde afin d'intégrer le sens dans lequel des données sont transmises dans le mode de communication simplex comme sens de liaison descendante comprend en outre :
la recherche, par le dispositif côté réseau, d'une information de configuration de système TDD stockée (TDD-Config), comprenant un indicateur d'attribution d'intervalle de temps en liaison montante et en liaison descendante de système TDD (subframeAssignment) ;
le transport du TDD-Config comprenant un subframeAssignment dans les informations de configuration de communication configurées, pour configurer les mêmes intervalles de temps en liaison montante et en liaison descendante sur la porteuse correspondant à la bande de fréquence de garde en tant que système TDD ; et
l'ajout d'un paramètre de désactivation d'intervalle de temps en liaison montante dans le TDD-Config transporté par les informations de configuration de communication, pour désactiver les intervalles de temps en liaison montante parmi les intervalles de temps configurés sur la porteuse correspondant à la bande de fréquence de garde.

4. Procédé selon la revendication 3, comportant en outre :
le transport, par le dispositif côté réseau, des informations de configuration de communication dans des informations de diffusion, et le support des informations de diffusion sur la porteuse correspondant à la bande de fréquence de garde, pour transmission à l'équipement d'utilisateur, afin d'ordonner à l'équipement utilisateur de transmettre des données sur la porteuse correspondant à la bande de fréquence de garde en fonction des informations de configuration de communication reçues.

5. Appareil de transmission de données comprenant :
un module de configuration (901) configuré, pour chacune des bandes de fréquence de garde entre un système de duplex par répartition dans le temps (TDD) et un système de duplex par répartition en fréquence (FDD), afin de configurer des informations de configuration de communication pour une porteuse correspondant à la bande de fréquence de garde, es informations de configuration de communication comprenant la direction dans laquelle des données sont transmises dans un mode de communication simplex sur la porteuse correspondant à la bande de fréquence de garde ; et
un module de transmission (902), configuré pour transmettre des données selon la technique TDD sur la porteuse correspondant à la bande de fréquence de garde, dans le sens de la transmission de données comprise dans les informations de configuration de communication configurées ;
le module de configuration (901) étant en outre configuré pour déterminer le sens dans lequel le système FDD transmet des données dans une première bande de fréquence adjacente en fréquence à la bande de fréquence de garde, le sens de transmission des données par le système FDD comprenant un sens de liaison montante et un sens de liaison descendante ; et lorsque le sens dans lequel le système FDD transmet des données dans la première bande de fréquence est déterminé comme sens de liaison montante, pour configurer les informations de configuration de communication pour la porteuse correspondant à la bande de fréquence de garde, afin d'intégrer le sens dans lequel des données sont transmises en mode de communication simplex comme sens de liaison montante et lorsque le sens dans lequel le système FDD transmet des données dans la première bande de fréquence est déterminé comme sens de liaison descendante, pour configurer les informations de configuration de communication pour la porteuse correspondant à la bande de fréquence de garde, afin d'intégrer le sens dans lequel des données sont transmises en mode de communication simplex comme sens de liaison descendante ;
l'appareil comprend en outre un module de diffusion (903) ;
lorsque le sens dans lequel le système FDD transmet des données dans la première bande de fréquence est déterminé comme sens de liaison montante, le module de configuration (901) est en outre configuré pour ajouter au TDD-Config transporté par les informations de configuration de communication un paramètre d'indicateur de fréquence central EARFCN de la porteuse correspondant à la bande de fréquence de garde ; et
**caractérisé en ce que**
le module de diffusion (903) est en outre configuré pour transporter les informations de configuration de communication avec l'EARFCN qui y est ajouté sous forme d'informations de diffusion, et pour porter les informations de diffusion sur une porteuse autre que la porteuse correspondant à la bande de fréquence de garde pour transmission à l'équipement utilisateur, afin d'ordonner à l'équipement utilisateur de transmettre des données sur la porteuse correspondant à la bande de fréquence de garde en fonction des informations de configuration de communication reçues.

6. Appareil selon la revendication 5, dans lequel, lorsque le sens dans lequel le système FDD transmet des données dans la première bande de fréquence est déterminé comme sens de liaison montante, le module de configuration (901) est en outre configuré pour rechercher une information de configuration de système TDD stockée (TDD-Config) comprenant un indicateur d'attribution d'intervalle de temps en liaison montante et en liaison descendante du système TDD (subframeAssignment), pour transporter le TDD-Config comprenant la subframeAssignment dans les informations de configuration de communication configurées pour configurer les mêmes intervalles de temps en liaison montante et en liaison descendante sur la porteuse correspondant à la bande de fréquence de garde en tant que système TDD et ajouter un paramètre de désactivation de l'intervalle de temps en liaison descendante dans le TDD-Config transporté par les informations de configuration de communication, afin de désactiver les intervalles de temps en liaison descendante parmi les intervalles de temps configurés sur la porteuse correspondant à la bande de fréquence de garde.

7. Appareil selon la revendication 5, dans lequel, lorsque le sens dans lequel le système FDD transmet des données dans la première bande de fréquence est déterminé comme sens de liaison descendante, le module de configuration (901) est en outre configuré pour rechercher des informations de configuration de système TDD stockées (TDD-Config) comprenant un indicateur d'attribution d'intervalle de temps en liaison montante et en liaison descendante de système TDD (subframeAssignment), pour transporter le TDD-Config comprenant le subframeAssignment dans les informations de configuration de communication configurées pour configurer les mêmes intervalles de temps en liaison montante et en liaison descendante sur la porteuse correspondant à la bande de fréquence de garde en tant que système TDD et pour ajouter un paramètre de désactivation d'intervalle de temps en liaison montante dans la TDD-Config transportée par les informations de configuration de communication, afin de désactiver les intervalles de temps en liaison montante parmi les intervalles de temps configurés sur la porteuse correspondant à la bande de fréquence de garde.

8. Appareil selon la revendication 7, dans lequel le module de diffusion (903) est configuré pour transporter les informations de configuration de communication dans des informations de diffusion et pour porter les informations de diffusion sur la porteuse correspondant à la bande de fréquence de garde pour transmission à l'équipement utilisateur, afin d'ordonner à l'équipement utilisateur de transmettre des données sur la porteuse correspondant à la bande de fréquence de garde en fonction des informations de configuration de communication reçues.

9. Dispositif côté réseau, comprenant l'appareil de transmission de données selon l'une quelconque des revendications 5 à 8.
